# EUROPÄISCHE PATENTSCHRIFT

(11) **EP 0 990 550 B1**
(45) Veröffentlichungstag und Bekanntmachung des Hinweises auf die Patenterteilung: **31.03.2004**
(21) Anmeldenummer: 99117738.7
(22) Anmeldetag: 09.09.1999
(51) Int. Cl.: B60N 2/06, B60N 2/72, A47C 7/02

(54) **Fahrzeugsitz**
Vehicle seat
Siège de véhicule

(30) Priorität: 29.09.1998 DE 19844524
(43) Veröffentlichungstag der Anmeldung: 05.04.2000
(73) Patentinhaber: DaimlerChrysler AG, 70567 Stuttgart (DE)
(72) Erfinder: Velimvassakis, Petros, 76227 Karlsruhe (DE); Wobst, Christian, 72160 Horb (DE)

(56) Entgegenhaltungen:
- DE-C- 19 524 174
- DE-C- 19 524 190
- US-A- 4 332 419
- US-A- 5 240 310
- PATENT ABSTRACTS OF JAPAN vol. 1997, no. 02, 28. Februar 1997 (1997-02-28) -& JP 08 253065 A (NHK SPRING CO LTD;NISSAN MOTOR CO LTD), 1. Oktober 1996 (1996-10-01)

## Beschreibung

Die Erfindung betrifft einen Fahrzeugsitz der im Oberbegriff des Patentanspruchs 1 angegebenen Gattung.

Bei einem bekannten Fahrzeugsitz dieser Art (DE 41 40 798 A1) ist die vordere Verbindung zwischen Polsterträger und Sitzgestell als Klippverbindung ausgeführt, die ein-mit der vorderen Traverse des Sitzgestells verbundenes Rohrstück und ein auf der Unterseite des als Sitzschale ausgebildete Polsterträgers angeformtes, klammerförmiges Klippelelement umfaßt, welches das Rohrstück auf mehr als die Hälfte von dessen Umfang umgreift. Die hintere Verbindung zwischen Polsterträger und Sitzgestell weist ein Federelement auf, das einerseits an einer einstückig an der Sitzschale ausgebildeten vertikalen Verbindungswand und andererseits an einer vertikal nach oben abstehenden Verbindungswange befestigt ist, die an der Oberschiene des Sitzgestells angeformt ist. Das Federelement besteht aus einem Gummikörper mit zwei aufvulkanisierten Platten. Die eine Platte ist dabei mit einem nach unten offenen Schlitz in einen in der Verbindungswand gehaltenen Kopfbolzen eingehängt, und die andere Platte ist mit einer nach unten offenen Nut auf den oberen Rand der Verbindungswange aufgesetzt, wobei zur Sicherung ein von der Platte unterhalb der Nut abgespreizter Vorsprung in einen Durchbruch der Verbindungswange eingreift und so ein späteres Relativverschieben von Platte und Verbindungswange in Vertikalrichtung verhindert. Bei einem solchen Fahrzeugsitz ist insbesondere die vordere Verbindung zwischen Sitzgestell und Polsterträger nicht ausreichend stabil gegen unbeabsichtigtes Lösen, so daß bei einem Crash das Aufreißen der Verbindung nicht zuverlässig ausgeschlossen werden kann.

Bei einem bekannten Fahrzeugsitz, der um eine vordere, querverlaufende Schwenkachse hochklappbar am Fahrzeugboden befestigt ist (DE 195 24 174 C1), ist zur Herstellung einer auch bei Crash stabilen, schnell lösbaren Verriegelung des Sitzes am Fahrzeugboden eine U-förmige, gleichschenkelige Federspange mit einer die beiden Federschenkel aufeinanderzu bewegenden Federvorspannung an dem als Kissenschale ausgebildeten Polsterträger festgelegt, deren beide Federschenkel einen am Fahrzeugboden befestigten Pilzkopf auf diametralen Seiten hintergreifen.

Der Erfindung liegt die Aufgabe zugrunde, bei einem Fahrzeugsitz der eingangs genannten Art eine fertigungstechnisch kostengünstige Verbindung zwischen Sitzgestell und Polsterträger zu schaffen, die nur geringe Montagezeit erfordert und eine auch in Extremsituationen ausreichende Stabilität gegen Lösen aufweist.

Die Aufgabe ist erfindungsgemäß durch die Merkmale des Patentanspruchs 1 gelöst.

Der erfindungsgemäße Fahrzeugsitz hat den Vorteil der extrem einfachen und zeitsparenden Montage des verpolsterten Polsterträgers auf das Sitzgestell, die sich auch sehr gut am Montageband bewerkstelligen läßt. Der fertig gepolsterte Polsterträger wird dabei mit seinen beiden Längsführungen auf die beiden Führungsbacken am Sitzgestell aufgeschoben und dann durch Herunterdrücken in den Rastbuchsen des Sitzgestells verclipst, wobei die beiden Federn selbsttätig in die Rastbacken einrasten. Durch die Verclipsung mit je einem Form- und Kraftschluß wird einerseits eine zuverlässige, sich unter Krafteinfluß auf den Polsterträger nicht lösende Verbindung geschaffen und auch jegliches Spiel in der Verbindung zwischen Polsterträger und Sitzgestell unterdrückt, so daß Klappergeräusche nicht auftreten können. Die beiden haarnadelartigen Federn sind kostengünstig zu fertigen, und ihre Halterungen am Polsterträger werden bei der Herstellung des Polsterträgers gleich mit angeformt, was keinen Fertigungsmehraufwand bedeutet, insbesondere wenn der Polsterträger als Kissenschale aus Kunststoff spritzgefertigt wird.

Vorteilhafte Ausführungsformen des erfindungsgemäßen Fahrzeugsitzes mit zweckmäßigen Ausgestaltungen und Weiterbildungen der Erfindung ergeben sich aus den weiteren Patentansprüchen.

Die Erfindung ist anhand eines in der Zeichnung dargestellten Ausführungsbeispiels im folgenden näher beschrieben. Es zeigen:
- Fig. 1: eine perspektivische Ansicht eines Sitzgestells eines Fahrzeugsitzes,
- Fig. 2: ausschnittweise eine Unteransicht eines als Kissenschale ausgebildeten Polsterträgers des Kraftfahrzeugsitzes in Verbindung mit einem Teil des Sitzgestells in Fig. 1,
- Fig. 3: einen Schnitt längs der Linie III-III in Fig. 2 bzw. in Fig. 1,
- Fig. 4: einen Schnitt längs der Linie IV-IV in Fig. 2 bzw. in Fig. 1,
- Fig. 5: einen Schnitt längs der Linie V-V in Fig. 2,
- Fig. 6: eine Draufsicht einer Feder einer vorderen - Verbindung zwischen Sitzgestell und Polsterträger des Fahrzeugsitzes.

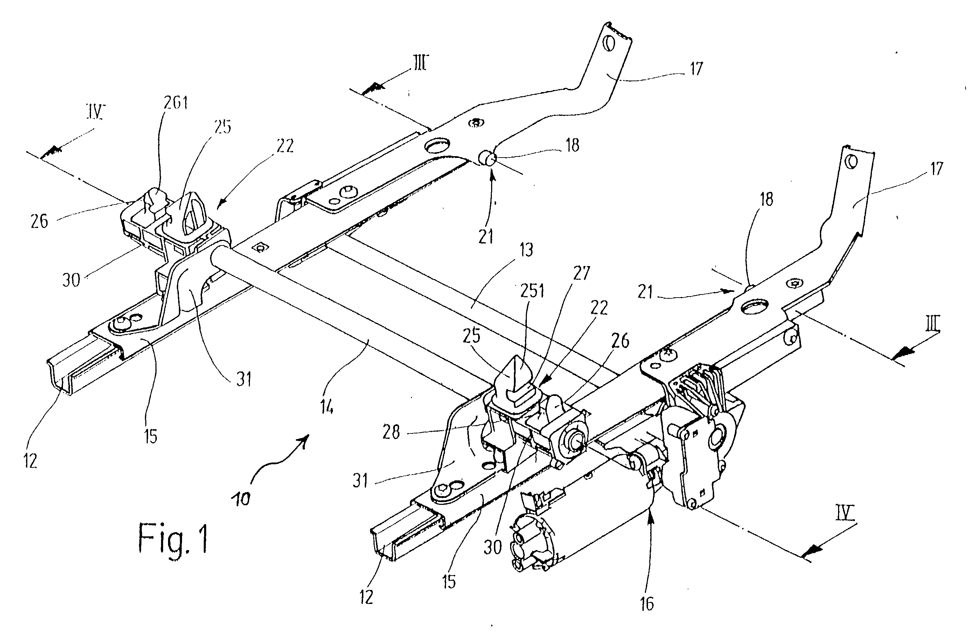

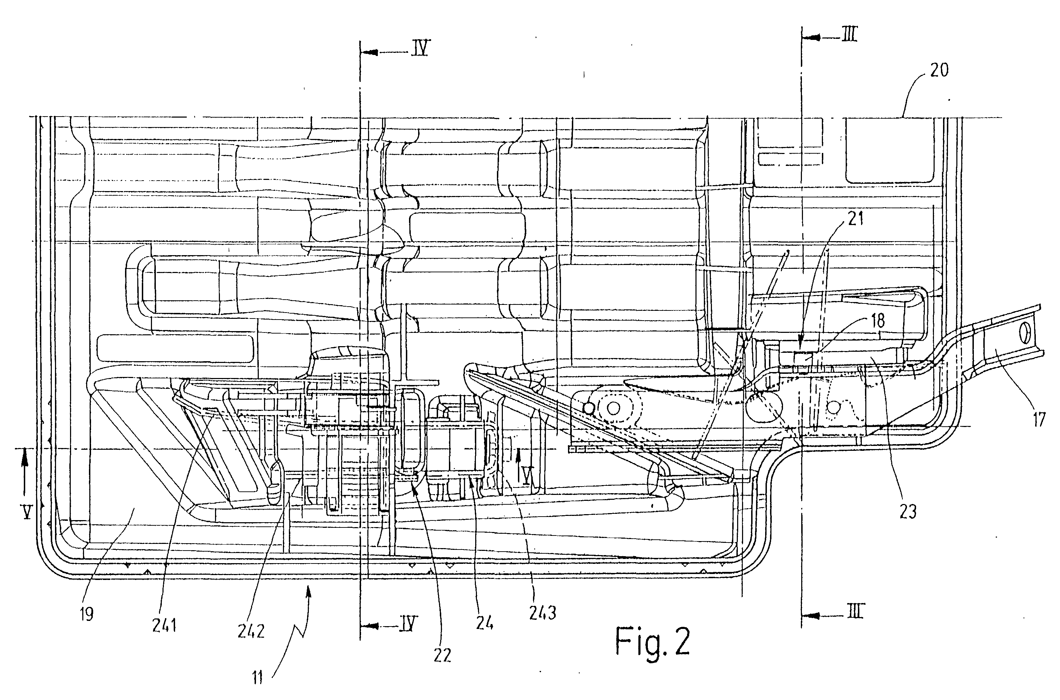

Der nur in seinen Einzelteilen dargestellte Fahrzeugsitz weist ein am Fahrzeugboden längsverschiebbares Sitzgestell 10 (Fig. 1) sowie einen ein Sitzpolster aufnehmenden Polsterträger 11 (Fig. 2) auf, die miteinander fest verbunden sind. Das Sitzgestelll 10 weist ein Paar Unterschienen 12, die über eine Quertraversere 13 miteinander verbunden und am Fahrzeugboden festgelegt sind, ein Paar durch eine Quertraverse 14 miteinander starr verbundene Oberschienen-15, von denen je eine auf einer Unterschiene 12 gleitend aufgenommen ist, sowie einen elektromotorischen Sitzversteller 16 auf, der die Oberschienen 15 auf den Unterschienen 12 in Längsrichtung verschiebt und in jeder gewünschten Position an den Unterschienen 12 verriegelt. Der Sitzversteller 16 ist an einer Unterschiene 12 im Bereich der Quertraverse 13 befestigt und greift mit einem motorisch angetriebenen Antriebsritzel in eine Längsverzahnung an der Unterseite der von dieser Unterschiene 12 aufgenommenen Oberschiene 15. An dem von der Quertraverse 14 abgekehrten hinteren Ende ist auf jeder Oberschiene 15 ein winkelförmiger Bügel 17 aufgesetzt und mit der Oberschiene 15 starr verbunden. Jeder Bügel 17 ist an seinem von der Oberschiene 15 abgekehrten freien Ende zur Aufnahme des Polsterträgers 11 nach oben abgekröpft und trägt jeweils einen quer abstehenden horizontal ausgerichteten Führungsbolzen 18, der im Bereich des Endes der Oberschiene 15 plaziert ist. Die beiden Führungsbolzen 18 stehen von einander zugekehrten Seiten der beiden Bügel 17 ab, und ihre Achsen fluchten miteinander.

Der Polsterträger 11 ist als eine aus Kunststoff gefertigte Kissenschale 19 ausgebildet, die in Fig. 2 ausschnittweise in Unteransicht in Verbindung mit einem Bügel 17 des Sitzgestells 10 dargestellt ist. Von der symmetrisch geformten Kissenschale 19 ist in Fig. 2 nur die eine Längshälfte dargestellt, wobei die Symmetrieachse der Kissenschale 19 mit 20 gekennzeichnet ist.

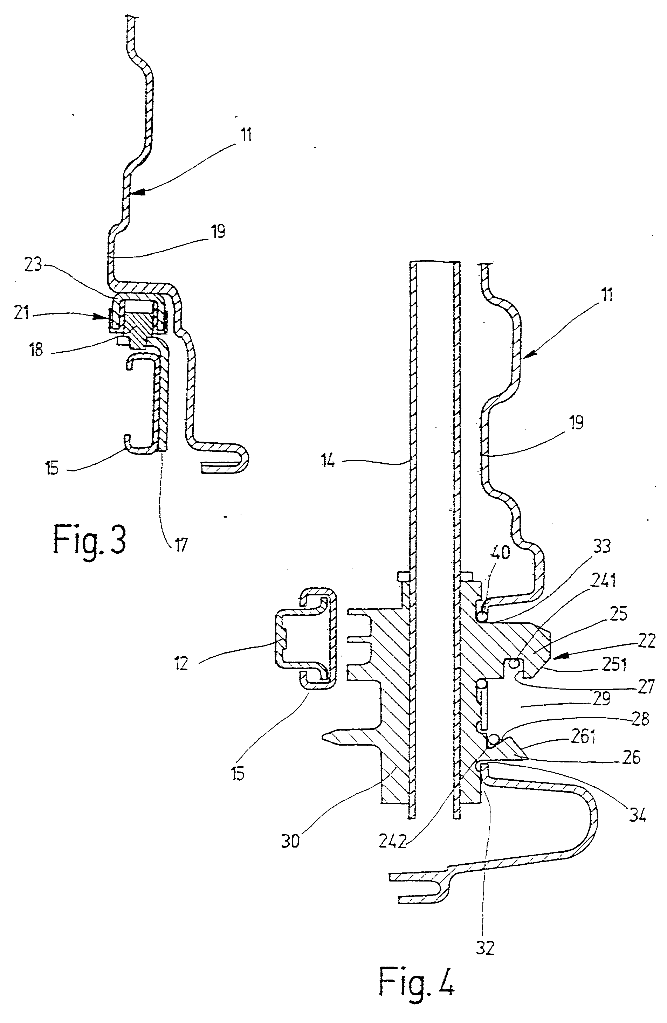

Zur Festlegung des-Polsterträgers 11 am Sitzgestell 10 ist jeweils eine paarweise ausgeführte hintere und vordere Verbindung zwischen Polsterträger 11 und Sitzgestell 10 vorgesehen, die sich schnell und mit wenigen Handgriffen herstellen lassen. Jede Verbindung 21 des hinteren Verbindungspaars umfaßt den bereits erwähnten, vom Bügel 17 an der Oberschiene 15 wegstehenden Führungsbolzen 18 und eine U-förmige Längsführung 23 (Fig. 2 und 3), die an der Unterseite der Kissenschale 19 angeordnet ist und den zugeordneten Bolzen 18 mit ihren U-Schenkeln von dessen Stirn aus übergreift. Jede Verbindung 22 des vorderen Verbindungspaars weist eine am Polsterträger 11, also an der Kissenschale 19, festgelegte, haarnadelartige Feder 24 (Fig. 2, 5 und 6) und zwei im Sitzgestell 10 voneinander quer beabstandet angeordnete Rastbacken 25-,26 auf, die jeweils mit einer von zwei einander zugekehrten Nuten 27 zum formschlüssigen Einlegen je eines Federschenkels 241,242 der in Richtung Rastbacken 25,26 aufspreizenden Feder 24 versehen sind (Fig. 1 und 4). An jedem Rastbacken 25,26 ist dabei oberhalb der Nut 27 bzw. 28 eine Führungsschräge 251 bzw. 261 so ausgebildet, daß die-einander zugekehrten Führungsschrägen 251 und 261 zwischen den Rastbacken 25,26 eine V-förmige Öffnung 29 zum Eindrücken der Federschenkel 241,242 bilden. Die beiden Rastbacken 25,26 einer jeden vorderen Verbindung 22 sind an einem Formstück 30 ausgebildet. Jeweils ein Formstück 30 ist auf die freien Enden der rohrförmigen Quertraverse 14 aufgeschoben, die ihrereseits über Winkellaschen 31 mit den Oberschienen 15 starr verbunden ist. An jedem Formstück 30 stehen die beiden Rastbacken 25,26 von einer der Auflage der Kissenschale 19 dienenden Aufspannfläche 32 rechtwinklig ab, und die Kissenschale 19 ist mit zweimal zwei Aussparungen 33,34 zum Durchtritt der insgesamt vier Rastbacken 25,26 versehen (Fig. 4).

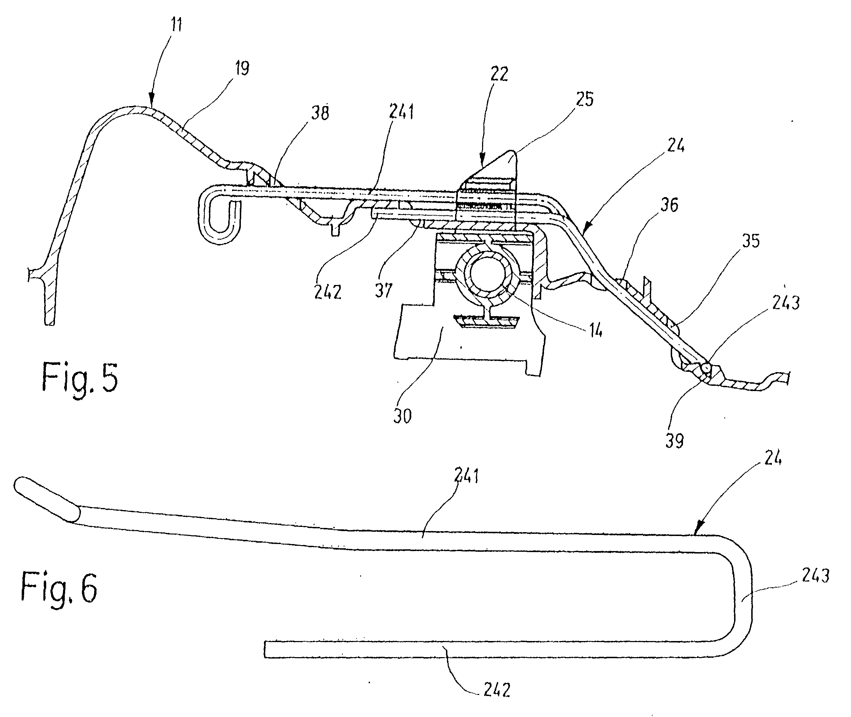

Wie in Fig. 2 und 5 zu sehen ist, ist jede Feder 24 in der Kissenschale 19 mittels einer Klemmnut 39 und mehreren Durchbrüchen 35 - 38, durch die die Feder 24 hindurchgeführt ist, form- und kraftschlüssig festgelegt, wobei der die beiden Federschenkel 243,242 verbindende Quersteg 243 der Feder 24 in die Klemmnut 39 eingeclipst ist und die Federschenkel 241,242 mit parallelen Schenkelabschnitten im Bereich der Aussparungen 33,34 auf der das Polster aufnehmenden Innenseite der Kissenschale 19 verlaufen. Die Anordnung der Nuten 27,28 in den Rastbacken 25,26 und die Ausbildung des Polsterträgers 11 bzw. der Kissenschale 19 im Bereich der Rastbacken 25,26 sowie der Verlauf der Federschenkel 241,242 ist so aufeinander abgestimmt, daß die in die Nuten 27,28 einrastende Feder 24 die Kissenschale 19 auf der Aufspannfläche 32 kraftschlüssig aufspannt. Zum Ausgleich eines evtl. toleranzbedingt auftretenden Spiels und zur Verbesserung des Kraftschlusses ist zwischen jeder Aufspannfläche 32 und der Kissenschale 19 ein elastisches Element in Form eines aus Gummi gefertigten O-Rings 40 angeordnet, der den Rastbacken 25 umschließt und am Grunde des Rastbackens 25 auf der jeweiligen Aufspannfläche 32 aufliegt.

Zur Montage des Fahrzeugsitzes wird die verpolsterte Kissenschale 19, an der die beiden Federn 24 vormontiert sind, mit ihren beiden Längsführungen 23 auf die beiden Bolzen 18 an den Oberschienen 15 des Sitzgestells 10 aufgeschoben und durch Herunterdrücken der Kissenschale 19 vorn diese mittels der beiden Federn 24 in den beiden Rastbackenpaaren 25,26 verclipst. Dabei werden die beiden Federschenkel 241,242 einer jeden Feder 24 durch die an den Rastbacken 25,26 ausgebildeten Führungsschrägen 251,261 gegen Federspannung aufeinanderzu bewegt und fallen unter Federkraft in die Nuten 27,28 ein, wo sie die Kissenschale 19 am Sitzgestell 10 zweifach sowohl form- als auch kraftschlüssig festlegen.

## Patentansprüche

1. Fahrzeugsitz mit einem insbesondere längsverschiebbaren Sitzgestell (10), mit einem ein Sitzpolster aufnehmenden Polsterträger (11) und mit jeweils einer paarweise ausgeführten hinteren und vorderen Verbindung (21,22) zwischen Polsterträger (11) und Sitzgestell (10) zum Festlegen des Polsterträgers (11) am Sitzgestell (10),
**dadurch gekennzeichnet,**
**daß** die hintere Verbindung (21) einem am Sitzgestell (10) quer abstehenden, horizontalen Führungsbolzen (18) und eine am Polsterträger (11) befestigte, U-förmige Längsführung (23) aufweist, die den Führungsbolzen (18) mit ihren U-Schenkeln von dessen Stirnseite aus übergreift, und daß die vordere Verbindung (22) eine am Polsterträger (11) festgelegte, haarnadelartige Feder (24) und zwei am Sitzgestell (10) voneinander quer beabstandet angeordnete Rastbacken (25,26) umfaßt, die jeweils eine von zwei einander zugekehrten Nuten (27,28) zum formschlüssigen Einlegen je eines Federschenkels (241,242) der in Richtung der Rastbacken (25,26) aufspreizenden Feder (24) aufweisen.

2. Sitz nach Anspruch 1,
**dadurch gekennzeichnet,**
**daß** an jedem Rastbacken (25,26) oberhalb der Nut (27,28) eine Führungsschräge (251,261) so ausgebildet ist, daß die einander zugekehrten Führungsschrägen (251,261) zwischen den Rastbacken (25,26) eine V-förmige Öffnung (29) zum Eindrücken der Federschenkel (241,242) bilden.

3. Sitz nach Anspruch 1 oder 2,
**dadurch gekennzeichnet,**
**daß** die Festlegung der Feder (24) am Polsterträger (11) formund kraftschlüssig vorgenommen ist.

4. Sitz nach einem der Ansprüche 1 - 3,
**dadurch gekennzeichnet,**
**daß** die Anordnung der Nuten (27,28) in den Rastbacken (25,26) und die Anordnung der Feder (24) in Nuten (39) und Durchbrüchen (35,38) des Polsterträgers (11) so aufeinander abgestimmt sind, daß die in die Nuten (27,28) einrastende Feder (24) den Polsterträger (11) auf dem Sitzgestell (10) kraftschlüssig aufspannt.

5. Sitz nach Anspruch 4,
**dadurch gekennzeichnet,**
**daß** zwischen dem Polsterträger (11) und dem Sitzgestell (10) ein elastisches Element (40) angeordnet ist und daß die Feder (24) im Aufspannbereich des Polsterträgers (11) abschnittweise auf der vom Sitzgestell (10) abgekehrten Innenseite des Polsterträgers (11) verläuft.

6. Sitz nach Anspruch 5,
**dadurch gekennzeichnet,**
**daß** das elastische Element ein aus Gummi gefertigter O-Ring (40) ist, der mindestens einen Rastbacken (25) umschließend auf dem Sitzgestell (10) aufliegt.

7. Sitz nach einem der Ansprüche 1 - 6,
**dadurch gekennzeichnet,**
**daß** der Polsterträger (11) als Kissenschale (19) ausgebildet ist, die im Bereich der vorderen Verbindung (22) Aussparungen (33, 34) zum Durchtritt jeweils eines Rastbackens (25,26) aufweist.

8. Sitz nach einem der Ansprüche 1 - 7,
**dadurch gekennzeichnet,**
**daß** das Sitzgestell (10) zwei Oberschienen (15) aufweist, die auf je einer am Fahrzeugboden befestigten Unterschiene (12) verschieblich geführt und durch eine Quertraverse (14) miteinander verbunden sind, und daß jeweils ein Rastbackenpaar (25,26) mit Rastnuten (27,28) und ein Führungsbolzen (18) an einer Oberschiene (15) angeordnet sind.

9. Sitz nach Anspruch 8,
**dadurch gekennzeichnet,**
**daß** die Anordnung der Rastbacken (25,26) im Bereich der die Oberschienen (15) verbindenden Quertraverse (14) erfolgt.

10. Sitz nach Anspruch-9,
**dadurch gekennzeichnet,**
**daß** die beiden Rastbacken (25,26) an einem Formstück (30) ausgebildet sind und daß jeweils ein Formstück (30) auf die freien Enden der die beiden Oberschienen (15) verbindenden Quertraverse (14) aufgeschoben sind.

## Claims

1. Vehicle seat with an, in particular, longitudinally displaceable seat framework (10), with a cushion support (11) receiving a seat cushion and with a rear and front connection (21, 22), each designed in pairs, between the cushion support (11) and seat framework (10) for securing the cushion support (11) on the seat framework (10), **characterised in that** the rear connection (21) has a horizontal guide bolt (18), which projects transversely on the seat framework (10), and a U-shaped longitudinal guide (23), which is fastened on the cushion support (11) and grips over the guide bolt (18) from the end face thereof with its U-legs, and **in that** the front connection (22) comprises a hairpin-like spring (24), which is secured on the cushion support (11), and two latching jaws (25, 26) which are arranged spaced apart transversely from one another on the seat framework (10), each of the latching jaws having one of two mutually facing grooves (27, 28) for interlocking insertion, in each case, of one spring leg (241, 242) of the spring (24) spreading in the direction of the latching jaws (25, 26).

2. Seat according to claim 1, **characterised in that** a guide slope (241, 261) is formed on each latching jaw (25, 26) above the groove (27, 28) in such a way that the mutually facing guide slopes (251, 261) between the latching jaws (25, 26) form a V-shaped opening (29) for pressing in the spring legs (241, 242).

3. Seat according to claim 1 or 2, **characterised in that** the spring (24) is secured to the seat support (11) with an interlocking and non-positive fit.

4. Seat according to any one of claims 1 to 3, **characterised in that** the arrangement of the grooves (27, 28) in the latching jaws (25, 26) and the arrangement of the spring (24) in grooves (39) and through-passages (35, 38) of the cushion support (11) are coordinated with one another such that the spring (24) latching in the grooves (27, 28) clamps the cushion support (11) on the seat framework (10) with non-positive fit.

5. Seat according to claim 4, **characterised in that** an elastic element (40) is arranged between the cushion support (11) and the seat framework (10) and **in that** the spring (24) in the clamping region of the cushion support (11) runs section-wise on the inside of the cushion support (11) remote from the seat framework (10).

6. Seat according to claim 5, **characterised in that** the elastic element is an O-ring (40) made from rubber which, enclosing at least one latching jaw (25), rests on the seat framework (10).

7. Seat according to any one of claims 1 to 6, **characterised in that** the cushion support (11) is designed as a cushion shell (19) which in the region of the front connection (22) has recesses (33, 34) for the passage of at least, one respective latching jaw (25, 26).

8. Seat according to any one of claims 1 to 7, **characterised in that** the seat framework (10) has two top rails (15) which are displaceably guided on a respective bottom rail (12) fastened to the vehicle base and are connected to one another by a cross-member (14), and **in that** in each case one pair of latching jaws (25, 26) with latching grooves (27, 28) and a guide bolt (18) are arranged on a top rail (15).

9. Seat according to claim 8, **characterised in that** the latching jaws (25, 26) are arranged in the region of the cross-member (14) connecting the top rails (15).

10. Seat according to claim 9, **characterised in that** the two latching jaws (25, 26) are formed on a moulding (30) and **in that** each moulding (30) is pushed onto the free ends of the cross-member (14) connecting the two top rails (15).

## Revendications

1. Siège de véhicule, comprenant un bâti de siège (10), en particulier déplaçable longitudinalement, avec un support de rembourrage (11), supportant un rembourrage d'assise, et avec respectivement une liaison arrière et une liaison avant (21, 22) réalisées par paire entre le support de rembourrage (11) et le bâti de siège (10), afin de fixer le support de rembourrage (11) sur le bâti de siège (10),
**caractérisé en ce que**
la liaison arrière (21) présente un boulon de guidage (18) horizontal, faisant saillie transversalement sur le bâti de siège (10), et un guidage longitudinal (23) en forme de U, fixé sur le support de rembourrage (11), qui entoure par le dessus le boulon de guidage (18) par ses branches de U, depuis sa face frontale, et **en ce que** la liaison avant (22) comprend un ressort (24) du genre d'une épingle à cheveux, fixé sur le support de rembourrage (11), et deux mâchoires d'encliquetage (25, 26), disposées à distance l'une de l'autre transversalement sur le bâti de siège (10), mâchoires d'encliquetage présentant chacune l'une de deux rainures (27, 28), tournées l'une vers l'autre, pour insertion avec liaison par ajustement de forme, chaque fois d'une branche de ressort (241, 242) du ressort (24), s'ouvrant par écartement dans la direction des mâchoires d'encliquetage (25, 26).

2. Siège selon la revendication 1, **caractérisé en ce que**, sur chaque mâchoire d'encliquetage (25, 26), au-dessus de la rainure (27, 28), est réalisée une pente de guidage (251, 261), **en ce que** les pentes de guidage (251, 261), tournées l'une vers l'autre, forment entre les mâchoires d'encliquetage (25, 26) une ouverture (29) en forme de V, pour enfoncement des branches de ressort (241, 242).

3. Siège selon la revendication 1 ou 2, **caractérisé en ce que** la fixation du ressort (24) sur le support de rembourrage (11) est effectuée par une liaison à ajustement de formes et à interaction de forces.

4. Siège selon l'une des revendications 1 à 3, **caractérisé en ce que** l'agencement des rainures (27, 28) dans les mâchoires d'encliquetage (25, 26), et l'agencement du ressort (25), dans des rainures (39) et des traversées (35, 38) du support de rembourrage (11), sont adaptés mutuellement, de manière que le ressort (24), s'encliquetant dans les rainures (27, 28), tende le support de rembourrage (27) sur le bâti de siège (11), en faisant appel à une liaison à interaction de forces.

5. Siège selon la revendication 4, **caractérisé en ce que**, entre le support de rembourrage (11) et le bâti de siège (11), est disposé un élément élastique (40) et **en ce que** le ressort (24), s'étend dans la zone de tension du support de rembourrage (11) par tronçons, sur la face intérieure, opposée au bâti de siège (10), du support de rembourrage (11).

6. Siège selon la revendication 5, **caractérisé en ce que** l'élément élastique est un élément torique (40) fabriqué en caoutchouc, reposant sur le bâti de chaise (10) en entourant au mois une mâchoire d'encliquetage (25).

7. Siège selon l'une des revendications 1 à 6, **caractérisé en ce que** le support de rembourrage (11) est réalisé sous forme de coque de coussin (19), présentant, dans la zone de la liaison avant (22), des évidements (33, 34) pour permettre le passage chaque fois d'une mâchoire d'encliquetage (25, 26).

8. Siège selon l'une des revendications 1 à 7, **caractérisé en ce que** le bâti de siège (10) présente deux glissières supérieures (15), guidées de façon mobile chacune sur une glissière inférieure (12), fixée au plancher du véhicule et reliées ensemble par une traverse transversale (14), et **en ce que**, chaque fois, une paire de mâchoires d'encliquetage (25, 26), ayant des rainures d'encliquetage (27, 28) et un boulon de guidage (18), sont disposées sur une glissière supérieure (15).

9. Siège selon la revendication 8, **caractérisé en ce que** l'agencement des mâchoires d'encliquetage (25, 26) se fait dans la zone de la traverse transversale (14), reliant les glissières supérieures (15).

10. Siège selon la revendication 9, **caractérisé en ce que** les deux mâchoires d'encliquetage (25, 26) sont réalisées sur une pièce profilée (30) et **en ce que**, chaque fois, une pièce profilée (30) est enfilée sur les extrémités libres de la traverse transversale (14), reliant les deux glissières supérieures (15).
